# EUROPÄISCHE PATENTSCHRIFT

(11) **EP 2 856 535 B1**
(45) Veröffentlichungstag und Bekanntmachung des Hinweises auf die Patenterteilung: **06.01.2016**
(21) Anmeldenummer: 13725574.1
(22) Anmeldetag: 25.05.2013
(51) Int. Cl.: H01M 2/10

(54) **SPEICHERELEMENT UMFASSEND MEHRERE LITHIUM-ZELLEN**
STORAGE ELEMENT COMPRISING A PLURALITY OF LITHIUM CELLS
ÉLÉMENT D'ACCUMULATION COMPRENANT PLUSIEURS CELLULES AU LITHIUM

(30) Priorität: 02.06.2012 DE 102012011083
(43) Veröffentlichungstag der Anmeldung: 08.04.2015
(73) Patentinhaber: Audi AG, 85045 Ingolstadt (DE)
(72) Erfinder: WANSNER, Michael, 86529 Schrobenhausen (DE); WINKLER, Josef, 85110 Kipfenberg (DE)
(74) Vertreter: Herbst, Matthias Heinz
(86) Internationale Anmeldenummer: PCT/EP2013/001552
(87) Internationale Veröffentlichungsnummer: WO 2013/178347

(56) Entgegenhaltungen:
- US-A- 5 422 200

## Beschreibung

Die Erfindung betrifft ein Speicherelement umfassend mehrere Lithium-Zellen, die als Stapel nebeneinander angeordnet und über zwei endseitig angeordnete Spannplatten, die über Spannelemente miteinander verbunden sind, verspannt sind.

In letzter Zeit werden Speicherelemente umfassend mehrere Lithium-Zellen immer wichtiger. Der Vorteil solcher Lithium-basierter Speicherelemente besteht einerseits in einer beachtlich hohen Energiedichte, die gespeichert respektive genutzt werden kann. Darüber hinaus liefern derartige Speicherelemente auch eine sehr konstante Spannung, wobei der Grad an Selbstentladung sehr gering ist. Sie zeigen auch keinen Memory-Effekt, können also nahezu beliebig oft ge- und entladen werden.

Derartige Speicherelemente werden wie ausgeführt aus mehreren zu einem Stapel geordneter einzelner Zellen konfiguriert, die über entsprechende Spannplatten und Spannelemente verspannt werden. Das Verspannen dieses Zellblocks ist erforderlich, um die gewünschte Lebensdauer zu erreichen. Hierzu werden üblicherweise prismatische Zellen verwendet, d. h., dass das Speicherelement, sei es eine Batterie oder ein Akkumulator, sortenrein aufgebaut wird. Solche prismatischen Zellen bestehen aus einem festen, relativ starren Gehäuse, in dem die eigentliche Speichereinheit angeordnet ist. Es besteht also nur aus einem Zelltyp, die einzelnen Zellen werden in Serie und/oder parallel geschaltet. Mitunter wäre für bestimmte Anwendungen, beispielsweise bei Einsatz eines solchen Speicherelements in einem Kraftfahrzeug, resultierend aus den gegebenen Anforderungen an das respektive Beanspruchung des Speicherelements die Bildung von Mischbatterien zweckmäßig, d. h., dass zwei unterschiedliche Zelltypen im Zellenblock vorhanden sind. Besonders zweckmäßig wäre die Kombination von prismatischen Zellen und Pouchzellen, also flexiblen, häufig auch "coffee bag"-Zellen genannten Lithium-Zellen. Diese Zellen bestehen aus flexiblen, aus einer Folie gebildeten Wänden, sind also in sich flexibel. Dies führt jedoch dazu, dass sie nicht in einen verspannten Zellenblock integriert werden können.

Aus US 5422200 A ist eine Batterieanordnung bestehend aus einem Stapel einzelner Alkalimetall-Batterien bekannt. Diese Stapelung umfasst mehrere einzelne Zellen, die unterschiedlichen Typs sein können. Jede Zelle umfasst eine Anode, eine Kathode und entsprechende Elektrolytschichten und ist in Form eines festen Blocks, der rechteckige Konfiguration besitzt, ausgeführt.

Aus WO 2012/041588 A1 ist ein Speicherelement der eingangs beschriebenen Art bekannt. Dieses besteht lediglich aus prismatischen Lithium-IonenZellen. Diese Zellen sind zu einem Stapel verspannt, der über endseitige Platten abgeschlossen ist. Zum Verspannen sind Zugbänder vorgesehen.

WO 2006/078103 A1 beschreibt eine Batterie, die eine einzige Pouchzelle aufweist. Die Pouchzelle ist in einem Gehäuse aufgenommen. Das Gehäuse besteht in der Regel aus Kunststoff und ist so geformt, dass die Pouchzelle in das Gehäuse eingelegt werden kann, wonach das Gehäuse geschlossen und Gehäuseteile miteinander verschweißt werden.

Der Erfindung liegt damit das Problem zugrunde, ein Speicherelement anzugeben, das als verspannter Zellenblock aus prismatischen Zellen und Pouchzellen konfiguriert werden kann.

Zur Lösung dieses Problems ist bei einem Speicherelement der eingangs genannten Art erfindungsgemäß vorgesehen, dass der Zellenstapel aus unterschiedlichen Zellentypen besteht, nämlich aus prismatischen Zellen umfassend ein stabiles Gehäuse sowie wenigstens einer Pouchzelle mit flexiblen Wänden, die in einem stabilen als geschlossenes Gehäuse ausgeführten Zellenhalter aufgenommen ist, dessen Außenmaß dem eines Gehäuses einer prismatischen Zelle entspricht, besteht.

Erfindungsgemäß ist eine Pouchzelle nicht als solche im Zellenstapel integriert, sondern über einen Zellenhalter, in dem sie angeordnet ist. Dieser Zellenhalter entspricht in seinen Ausmaßen, also in seiner Länge, Breite und Höhe, den Ausmaßen eines Gehäuses einer prismatischen Zelle. Da dieser Zellenhalter hinreichend stabil ist, wie eben auch die Gehäuse der prismatischen Zellen, kann folglich der Zellenblock in der erforderlichen Weise verspannt werden. Der Zellenblock ist also, was die Abmaße der einzelnen Zellen angeht, quasi "sortenrein", wenngleich er sich aus unterschiedlichen Zelltypen zusammensetzt.

Der Zellenhalter selbst ist bevorzugt ebenfalls als geschlossenes Gehäuse ausgeführt, in dem eine oder mehrere Pouchzellen aufgenommen sind. Die Ausführung als geschlossenes Gehäuse verleiht eine hinreichende Stabilität. Da es in seinen Außenmaßen dem einer prismatischen Zellen entspricht ist es möglich, nicht nur eine Pouchzelle in einem solchen Gehäuse anzuordnen, sondern, nachdem diese Pouchzellen sehr flach sind, auch zwei oder sogar drei Zellen, sodass durch Verwendung nur eines solchen Gehäuse-Zellenhalters mehrere Pouchzellen in den Stapel integriert werden können.

In Weiterbildung der Erfindung ist vorgesehen, dass in dem Zellenhalter die gleichen Kontaktelemente an gleichen Positionen wie entsprechende Kontaktelemente eines Gehäuses einer prismatischen Zelle vorgesehen sind. Dies ermöglicht die Nutzung der gleichen Anschlusstechnik respektive der gleichen Anschlussebenen zum Kontaktieren des Pouchzellen-Zellenhalters wie auch der prismatischen Zellen, sodass sich, was die Kontaktierung angeht, ein homogener Aufbau ergibt.

Ferner kann erfindungsgemäß vorgesehen sein, dass zwischen zwei Zellen und gegebenenfalls zwischen der jeweils äußersten Zelle und einer Spannplatte eine Abstandsplatte angeordnet ist. Diese Abstandsplatten versteifen den Zellenstapel und verleihen im Hinblick auf die Verspannung eine hinreichende Stabilität, sodass auch höhere Spannkräfte angelegt werden können. Dabei ist vorzugsweise zwischen jeweils zwei Zellen, unabhängig davon, ob es sich nun um prismatische Zellen, um eine prismatische Zelle und eine im Zellenhalter befindliche Pouchzelle, oder um zwei Zellenhalter handelt, eine Abstandsplatte angeordnet, wie auch zwischen den jeweils endständigen Zellen und der unmittelbar anliegenden Spannplatte.

Als Spannmittel können Spannbänder verwendet werden, wobei grundsätzlich aber auch die Möglichkeit besteht, die Verspannung über axiale Streben, die gegebenenfalls seitlich am Zellenstapel vorbeigeführt sind.

Weitere Vorteile, Merkmale und Einzelheiten der Erfindung ergeben sich aus dem im Folgenden beschriebenen Ausführungsbeispiels sowie anhand der Zeichnungen. Dabei zeigen:
- Fig. 1: eine Schnittansicht durch einen erfindungsgemäßen Zellenhalter in Form eines Gehäuses mit integrierter Pouchzelle einer ersten Ausführungsform
- Fig. 2: eine Schnittansicht durch einen erfindungsgemäßen Zellenhalter mit einer integrierten Pouchzelle einer zweiten Ausführungsform,
- Fig. 3: eine Prinzipdarstellung eines erfindungsgemäßen Lithium-Misch-Speicherelements einer ersten Ausführungsform, und
- Fig. 4: eine Prinzipdarstellung eines erfindungsgemäßen Lithium-Misch-Speicherelements einer zweiten Ausführungsform.

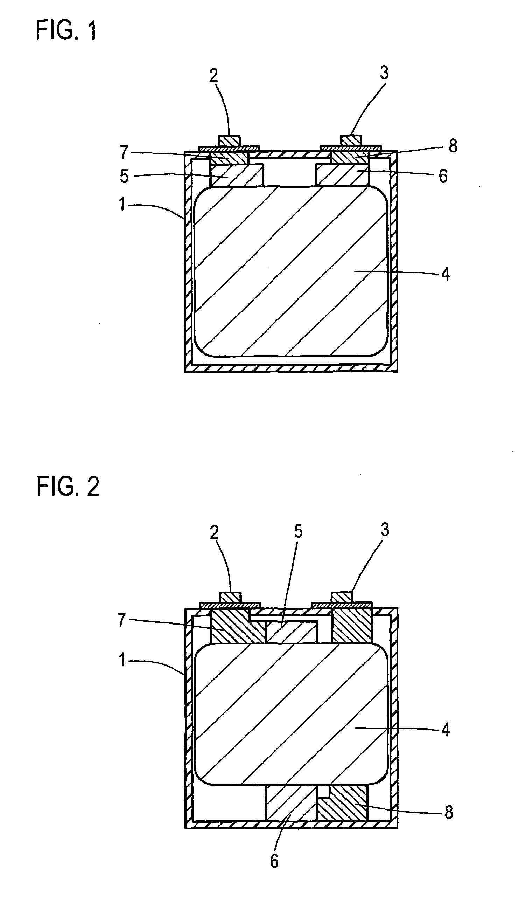

Fig. 1 zeigt in Form einer Schnittansicht einen Zellenhalter 1, der als rechteckiges geschlossenes Gehäuse ausgeführt ist. Er besteht vorzugsweise aus Kunststoff und weist an seiner Oberseite Kontaktschnittstellen 2, 3 auf, um die in ihm befindliche Pouchzelle 4 mit anderen Lithium-Zellen, die in einem Zellenblock eingespannt werden, zu kontaktieren. Die Lithium-Pouchzelle 4 ist als an sich flexible Zelle in dem stabilen Zellenhalter 1 aufgenommen. Sie weist in an sich bekannter Weise zwei Pole 5, 6 auf, die über Kontaktelemente 7, 8 mit den Kontaktschnittstellen 2, 3 des Zellenhalters 1 verbunden sind.

In dem Zellenhalter 1 ist in diesem Ausführungsbeispiel nur eine Pouchzelle 4 aufgenommen. Denkbar ist es, wenn die Pouchzelle hinreichend schmal ist, eine zweite oder dritte in dem Zellenhalter 1 zu integrieren, wenn dieser breit genug ist.

Während sich bei dem Ausführungsbeispiel gemäß Fig. 1 die beiden Pole 5, 6 an der gleichen Seite der Pouchzelle 4 befinden, zeigt Fig. 2 ein Ausführungsbeispiel, bei dem die Pole 5, 6 an zwei gegenüberliegenden Seiten der Pouchzelle 4 vorgesehen sind. In diesem Fall sind die Kontaktelemente 7, 8 entsprechend ausgeführt respektive verlegt, sodass die Pole 5, 6 mit den entsprechenden Kontaktschnittstellen 2, 3 verbunden werden können. Auch hier ist jedoch die Pouchzelle 4 (oder sind mehrere Pouchzellen 4) in einem nach Art eines geschlossenen Gehäuses ausgeführten Zellenhalter 1 aus Kunststoff aufgenommen, mithin also vollständig gekapselt.

Der Zellenhalter 1 ist vorzugsweise zweiteilig ausgeführt, bestehend aus dem eigentlichen Gehäusekörper und einem Deckel, der auf einfache Weise aufgesetzt wird, um das Gehäuse zur Bildung des geschlossenen Zellenhalters 1 zu schließen. Denkbar ist es, diesen Verschluss unlösbar auszugestalten, beispielsweise, indem die beiden Teile miteinander verschweißt werden, was, nachdem sie bevorzugt aus Kunststoff bestehen, besonders einfach ist. Alternativ ist aber auch die Verbindung über entsprechende Rastelemente oder dergleichen möglich.

Die Außenmaße des Zellenhalters 1, also seine Länge, Breite und Höhe, entsprechen den Außenmaßen einer prismatischen Zelle. Eine prismatische Zelle weist von Haus aus ein Gehäuse auf, das üblicherweise eine rechteckige Form besitzt, es kann aber natürlich auch andere Formen aufweisen, wobei dann natürlich auch die Form des Zellenhalters 1 entsprechend ausgelegt ist, sodass sich eine gleiche Geometrie ergibt.

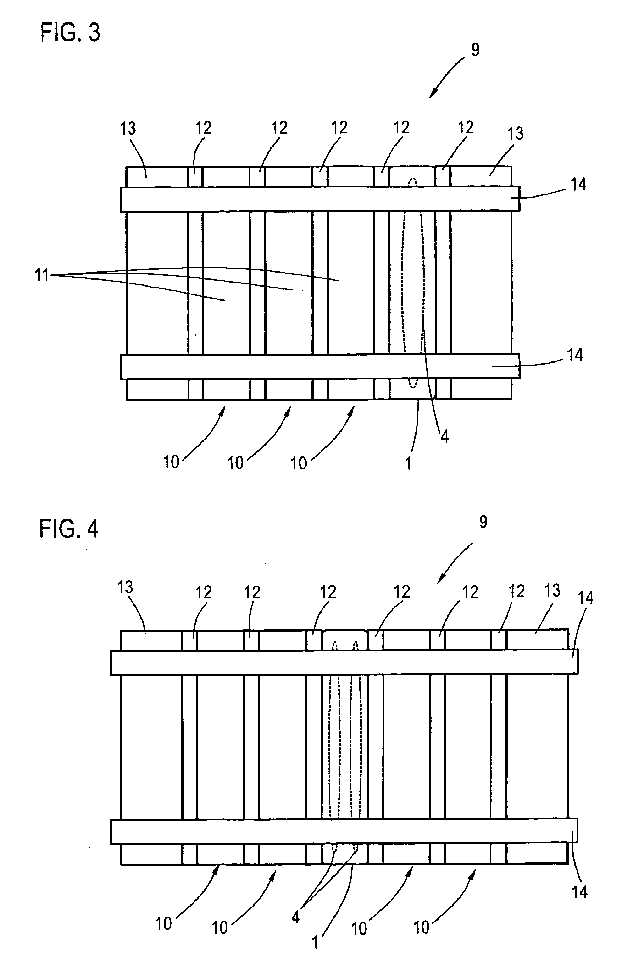

Fig. 3 zeigt ein Ausführungsbeispiel, bei dem ein Speicherelement 9 als Zellenblock sowohl aus prismatischen Zellen 10 als auch aus einem Zellenhalter 1 mit integrierter, hier nur gestrichelt gezeigter Pouchzelle 4 gebildet ist. Wie ausgeführt ist, entsprechen die Außenmaße des Zellenhalters 1 den Außenmaßen des Gehäuses 11 einer jeden prismatischen Zelle, wie in Fig. 3 anschaulich gezeigt. Sie sind also bevorzugt gleich hoch, gleich lang und gleich breit. Das Gehäuse verleiht der Pouchzelle 4 die hinreichende Stabilitat, damit sie in einen solchen Zellenstapel integriert werden kann.

Zwischen jeweils zwei Zellen ist jeweils eine Abstandsplatte 12 gesetzt, ferner ist zwischen jede endständige Zelle und eine endseitige Spannplatte 13 ebenfalls jeweils eine Abstandsplatte 12 gesetzt, sodass sich also ein abwechselnder Schichtstapel aus Spannplatten, Abstandsplatten und Zellen respektive Zellenhalter ergibt. Dieser Verbund wird über Spannmittel, hier Spannbänder 14, axial fest verspannt.

Fig. 4 zeigt eine weitere Ausgestaltung einer exemplarischen Konfiguration eines Speicherelements 9 in Form eines Zellenblocks. Wiederum sind zwei endständige Spannplatten 13 vorgesehen, wie auch eine Abfolge von Abstandsplatten 12 und prismatischen Zellen 10 sowie auch hier einem Zellenhalter 1, in dem im gezeigten Beispiel jedoch zwei Pouchzellen 4 angeordnet sind.

Wenngleich Fig. 4 wiederum die Integration nur eines Zellenhalters 1, hier jedoch mit zwei Pouchzellen 4 zeigt, ist es selbstverständlich denkbar, auch mehrere Zellenhalter 1 mit jeweils einer oder mehreren Pouchzellen 4 zu integrieren. D. h., dass letztlich die konkrete Auslegung des Zellenblocks und damit des Speicherelements 9 beliebig ist.

Selbstverständlich weisen auch die prismatischen Zellen 10 entsprechende Kontaktschnittstellen auf, diese sind an der gleichen Seite im Zellenblock positioniert, wie die Kontaktschnittstellen 2, 3 des oder jedes im Zellenblock integrierten Zellenhalters 1, sodass alle Kontaktschnittstellen auf einfache Weise miteinander kontaktiert werden können.

## Patentansprüche

1. Speicherelement umfassend mehrere Lithium-Zellen, die als Stapel nebeneinander angeordnet und über zwei endseitig angeordnete Spannplatten, die über Spannelemente miteinander verbunden sind, verspannt sind,
**dadurch gekennzeichnet,**
**dass** der Zellenstapel aus unterschiedlichen Zellentypen besteht, nämlich aus prismatischen Zellen (10) umfassend ein stabiles Gehäuse (11) sowie wenigstens einer Pouchzelle (4) mit flexiblen Wänden, die in einem stabilen, als geschlossenes Gehäuse ausgeführten Zellenhalter (1) aufgenommen ist, dessen Außenmaß dem eines Gehäuses (11) einer prismatischen Zelle (10) entspricht, besteht.

2. Speicherelement nach Anspruch 1,
**dadurch gekennzeichnet,**
**dass** in einem Zellenhalter (1) eine oder mehrere Pouchzellen (4) aufgenommen sind.

3. Speicherelement nach einem der vorangehenden Ansprüche,
**dadurch gekennzeichnet,**
**dass** an dem Zellenhalter (1) die gleichen Kontaktelemente (2, 3) an gleichen Positionen wie entsprechende Kontaktelemente der Gehäuse (11) der prismatischen Zellen (10) vorgesehen sind.

4. Speicherelement nach einem der vorangehenden Ansprüche,
**dadurch gekennzeichnet,**
**dass** zwischen zwei Zellen (1, 10) und gegebenenfalls zwischen der jeweils äußersten Zelle (1, 10) und einer Spannplatte (13) eine Abstandsplatte (12), angeordnet ist.

5. Speicherelement nach einem der vorangehenden Ansprüche,
**dadurch gekennzeichnet,**
**dass** als Spannmittel Spannbänder (14) vorgesehen sind.

## Claims

1. A storage element comprising a plurality of lithium cells, which are arranged beside one another as a stack and are clamped via two clamping plates arranged at the ends, said plates being connected to each other via clamping elements,
**characterized in**
**that** the cell stack consists of different cell types, namely of prismatic cells (10) comprising a stable housing (11) and at least one pouch cell (4) with flexible walls, which is accommodated in a stable cell holder (1), designed as a closed housing, the external dimension of which corresponds to that of a housing (11) of a prismatic cell (10).

2. A storage element according to claim 1,
**characterized in**
**that** one or several pouch cells (4) are accommodated in a cell holder (1).

3. A storage element according to one of the preceding claims,
**characterized in**
**that** the same contact elements (2, 3) are provided on the cell holder (1) at the same positions as corresponding contact elements of the housing (11) of the prismatic cell (10).

4. A storage element according to one of the preceding claims,
**characterized in**
**that** a spacer plate (12) is arranged between two cells (1, 10) and, if applicable, between each of the outermost cells (1, 10) and a clamping plate (13).

5. A storage element according to one of the preceding claims,
**characterized in**
**that** clamping straps (14) are provided as clamping means.

## Revendications

1. Élément d'accumulation comprenant plusieurs cellules au lithium qui sont agencées en pile les unes à côté des autres et qui sont serrées par l'intermédiaire de deux plaques de serrage agencées aux extrémités et assemblées l'une à l'autre par l'intermédiaire d'éléments de serrage,
**caractérisé en ce que** la pile de cellules est constituée de différents types de cellules, à savoir des cellules prismatiques (10) comprenant un habillage (11) stable ainsi qu'au moins une cellule en sachet (4) avec des parois flexibles, laquelle cellule en sachet est logée dans un support de cellule (1), stable et réalisé comme un habillage fermé, dont la dimension extérieure correspond à celle d'un habillage (11) d'une cellule prismatique (10).

2. Élément d'accumulation selon la revendication 1, **caractérisé en ce qu'**une ou plusieurs cellules en sachets (4) sont logées dans un support de cellules (1).

3. Élément d'accumulation selon l'une des revendications précédentes, **caractérisé en ce qu'**il est prévu sur le support de cellules (1) les mêmes éléments de contact (2, 3) aux mêmes positions que les éléments de contact correspondants des habillages (11) des cellules prismatiques (10).

4. Élément d'accumulation selon l'une des revendications précédentes, **caractérisé en ce qu'**une plaque de mise à distance (12) est agencée entre deux cellules (1, 10) et le cas échéant entre la cellule respectivement la plus à l'extérieur (1, 10) et une plaque de serrage (13).

5. Élément d'accumulation selon l'une des revendications précédentes, **caractérisé en ce que** des bandes de serrage (14) sont prévues comme moyen de serrage.
